# EUROPÄISCHE PATENTSCHRIFT

(11) **EP 0 483 884 B1**
(45) Veröffentlichungstag und Bekanntmachung des Hinweises auf die Patenterteilung: **20.03.1996**
(21) Anmeldenummer: 91118786.2
(22) Anmeldetag: 04.11.1991
(51) Int. Cl.: C04B 28/26, E02D 31/00, B09B 1/00, C09K 3/10, C04B 14/14

(54) **Dichtmasse und Verwendung von Ergussgestein dafür**
Sealant and use of ingeous rock therefor
Masse d'étanchéité et utilisation de roche effusives pour celle-ci

(30) Priorität: 02.11.1990 DE 4034964; 05.08.1991 DE 4125921
(43) Veröffentlichungstag der Anmeldung: 06.05.1992
(73) Patentinhaber: SWIETELSKY BAU GmbH, D-83268 Traunstein (DE); AUGUST REINERS BAU GmbH & Co., D-28203 Bremen (DE)
(72) Erfinder: Lauf, Gerhard, c/o Swietelsky Bau-GmbH, W-8220 Traunstein (DE); Hartmann,Volker, W-2819 Thedinghausen (DE); Poschenrieder,Manfred, W-8411 Zeitlarn 2 (DE)
(74) Vertreter: Kern, Ralf M., Dipl.-Ing.

(56) Entgegenhaltungen:
- DE-A- 3 707 267
- DATABASE WPIL Week 8240, Derwent Publications Ltd., London, GB; AN 82-85466E
- DATABASE WPI Week 7252, Derwent Publications Ltd., London, GB; AN 72-82743T

## Beschreibung

Für die Auswahl der Materialien und deren Anwendung z. B. für Deponie-Basis-Dichtungen, d. h. z. B. der Abdichtung des Deponieuntergrunds gegen Sickerwasser- bzw. Sickerflüssigkeits-Durchlässe in den Untergrund spielt einerseits die dauerhafte Beständigkeit gegen aus der Deponie heraustretende bzw. -sickernde chemisch aggressive Stoffe, andererseits die Beständigkeit auch gegen hochaggressive Sickerflüssigkeit eine entscheidende Rolle.

Bekannt sind für mineralische Dichtungen bzw. Abdichtungen Mischungen aus nicht quellenden chemisch inaktiven Tonmineralien wie Kaolinit oder Illit sowie Schluff, Sand und Kies.

Deren physikalische Abdichtleistung kann dadurch optimiert werden, daß ein verbleibender Restporenraum durch ein chemisch inertes, anfangs flüssiges Hydrogel ausgefüllt wird. Damit wird die Kapillaraktivität des Dichtungsmaterials und auch die Adsorptionsfähigkeit der Oberflächen der silikatischen mineralischen Materialkomponente der Mineral-Mischung erhöht. Derartige Hydrogele verhindern auch eine evtl. hydraulische Verfestigung, so daß das natürliche plastische Verhalten der tonigen Materialien ohne Schrumpfen erhalten bleibt.

Damit beruht jedoch die Zuverlässigkeit der chemischen Resistenz vorwiegend auf der Dichtungswirkung des Hydrogels und läßt die Kriterien der damit vermischten Mineralstoffe außer acht.

Aufgabe der Erfindung ist die Schaffung einer Dichtung der eingangs beschriebenen Art bzw. eines Gemisches dafür mit darüber hinaus verbesserter und zudem extrem langzeitiger Resistenz gegen chemische Einwirkung auch besonders stark aggressiver Substanzen, und zwar auf wirtschaftlich optimale Weise.

Überraschenderweise haben diesbezügliche Forschungsergebnisse gezeigt, daß es entscheidend auf bestimmte Verunreinigungen der an sich vom Hydrogel eingehüllten Mineralstoffe ankommt, um die Dichtung auch gegen höchst aggressive Stoffe wirksam zu machen, in die auch synergistische bzw. kombinierte Wirkungen unterschiedlicher aggressiver Stoffe einzubeziehen sind.

Dementsprechend ist die Erfindung durch eine Dichtmasse gekennzeichnet, die in besonders wirkungsvoller Weise bei besonders stark oder höchst aggressiven Sickerflüssigkeiten einsetzbar ist, und zwar durch die Verwendung einer Gemischkombination aus einem Tonmehlanteil in der Größenordnung von etwa 15 Gew.-% vorzugsweise in einer Korngröße 0/09 mm, einem Mineral- bzw. Gesteinsanteil in der Größenordnung von etwa 85 Gew.-% mit einer vorzugsweisen Körnung von optimal etwa 0/8 mm bis 0/32 mm oder maximal ca. 0/63 mm mit einem porendichtenden Hydrogel in wenigen Gew.-% unter Auswahl des Mineral- bzw. Gesteinsanteils insbesondere als im wesentlichen nicht karbonathaltiges Ergußgestein.

In besonders vorteilhafter u. a. auch wirtschaftlicher Ausführung besteht der Mineral- oder Gesteinsanteil der Mischungskombination aus einem karbonatfreien (magmatischen) Ergußgestein wie z. B. Diabas, Porphyr, Basalt, oder - besonders bevorzugt - einem Tiefengestein wie Granit od. dergl., bei dem ein zuverlässig allenfalls nur in Spuren vorliegender Karbonatgehalt am einfachsten gewährleistet ist. Insbesondere von Vorteil ist es, wenn der gesamte Mineralanteil des Abdichtungsmaterials, also auch der Tonmehlanteil also z.B. kaolinitischer Ton mit mindestens 75 % < 2 µm φ und mindestens 75 % Kaolinitgehalt karbonatfrei ist.

Das spezielle erfindungsgemäße und überraschende Merkmal der Karbonatfreiheit könnte sich dadurch unerwartet vorteilhaft auswirken, daß eine durch Einfluß von Säurebestandteilen auch unter Druck entstehende Bildung von CO₂-Gas sowie ein evtl. entsprechendes Aufbrechen der gegen Aggression geschützten Oberfläche und eine evtl. Gasblasen- sowie Rissbildung nicht eintreten kann. Auch ein Einfluß von in der plastisch verformbaren Dichtmasse evtl. wandernden oder sich sammelnden Gasblasen wird ausgeschaltet.

Die notwendige Homogenität der Mischung wird durch Verarbeitung in einem üblichen Doppelwellenzwangsmischer erzielt.

Als damit verwendbares inertes Hydrogel kann DYNAGROUT-GEL der Fa. Hüls Verwendung finden, welches im Sinne der Erfindung auch mit den Oberflächen des Erguß- bzw. Tiefengesteins starke Bindungen ausbildet, die einen Durchbruch von angreifenden Sickerwässern an der Grenzfläche vermeiden, d. h. zugleich chemikalien-resistent und mechanisch konsistent sind. Auch die Adsorptivität der Gesteins- Oberflächen gegen einzelne Schadstoffe wird dadurch ähnlich erhöht wie bei den kaolinitischen oder illtischen Oberflächen, so daß mit der Karbonatfreiheit des eingekapselten bzw. umhüllten mineralischen Gesteinsanteils eine zusätzliche Sicherheit erzielt wird, was insbesondere auch für die Absicherung gegen hochkonzentrierte höchst-toxische Materialien z. B. Äthylendichlorid (EDC) zusätzliche Sicherheitsvorteile bietet. Mit der erhöhten Durchlässigkeitssicherung und Resistenz auch gegen höchst aggressive Sickerflüssigkeiten geht auch eine stark erwünschte Verbesserung der Langzeitbeständigkeit der Dichtung einher.

Das Hydrogel besteht im Falle des Produkts Dynarout aus schadstoffbeständien Sililaten mit anorganischen Co-Härtern und metallisch-anorganischen Siliziumverbindungen (Silane), wobei diese zwei Komponenten so abgestimmt werden können, daß speziell mit Wasserglaslösungen niedrige Alkalität und Viskosität, aber hohem SiO2/Na2O Verhältnis hochdichte Gele hergestellt werden können. Dabei können z. B. ca. 30 Vol.-% Wasserglas und ca. 60 Vol.-% Wasser ein schadstoff-resistentes Silikatgel bilden.

## Patentansprüche

1. Dichtmasse für die Abdichtung von Boden und Wänden von Müll- und Abfalldeponien mit verstärkt aggressiver Sickerflüssigkeit oder als Auskleidung von Auffang-Wannen oder - Behältern für hochaggressive Flüssigkeiten, **gekennzeichnet** durch die Verwendung einer Gemischkombination aus einem Tonmehlanteil in der Größenordnung von 15 Gew.-%, vorzugsweise in einer Korngröße 0/0,09 mm, einem Mineral- bzw. Gesteinsanteil in der Größenordnung von 85 Gew.-% und in einer vorzugsweisen Körnung von insbesondere 0/8 mm bis 0/32 mm oder maximal 0/63 mm sowie einem porendichtenden Hydrogel in wenigen Gew.% unter Auswahl des Mineral- bzw. Gesteinsanteils als im wesentlichen nicht karbonathaltiges Ergußgestein.

2. Dichtmasse nach Anspruch 1, dadurch **gekennzeichnet,** daß der Mineral- bzw. Gesteinsanteil aus einem karbonatfreien Gestein, insbesondere einem karbonatfreien Ergußgestein besteht.

3. Dichtmasse nach einem der Ansprüche 1 oder 2, dadurch **gekennzeichnet,** daß das gesamte Gemisch karbonatfrei ist.

4. Verwendung von Ergußgestein in karbonatfreier Zusammensetzung und einer Körnung von ca. 0/8 bis 0/63 mm als Mineral- bzw. Gesteinsanteil für Dichtungsmassen gegen verstärkt bzw. hochaggressive Schadstoffe unter Beimischung von wenigen Gew.-% eines porendichtenden Hydrogels für die Abdichtung von Boden u. Wänden von Abfalldeponien mit verstärktaggressiver Sickerflüssigkeit oder als Auskleidung von Auffang Wanne u. -Behältern für hochaggressive Flüssigkeiten.

5. Verwendung eines karbonatfreien Tonmehls in Kombination mit einer Verwendung nach Anspruch 4.

## Claims

1. Sealing compound for sealing the base and walls of refuse dumps and landfill sites having intensely aggressive seepage liquid or as a lining of collection tanks or containers for highly aggressive liquids, characterized by the use of a mixture combination of a proportion of powdered clay in the order of magnitude of 15% by weight, preferably in a particle size of 0/0.09 mm, a proportion of mineral or rock in the order of magnitude of 85% by weight and preferably a particle size of, in particular, 0/8 mm to 0/32 mm or a maximum of about 0/63 mm, and a pore-sealing hydrogel of a low percentage by weight with selection of the proportion of mineral or rock as igneous rock which essentially does not contain carbonate.

2. Sealing compound according to Claim 1, characterized in that the proportion of mineral or rock consists of a carbonate-free rock, in particular a carbonate-free igneous rock.

3. Sealing compound according to one of Claims 1 or 2, characterized in that the entire mixture is carbonate-free.

4. Use of igneous rock in a carbonate-free composition and in a particle size of about 0/8 to 0/63 mm as the proportion of mineral or rock for sealing compounds against intensely or highly aggressive pollutants with the addition of a low percentage by weight of a pore-sealing hydrogel for sealing the base and walls of landfill sites with intensely aggressive seepage liquid or as a lining of collection tanks and containers for highly aggressive liquids.

5. Use of a carbonate-free powdered clay in combination with a use according to Claim 4.

## Revendications

1. Masse d'étanchéité pour l'étanchement du fond et des parois de dépôts de déchets et d'ordures avec un liquide d'égouttement fortement agressif, ou en tant que revêtement de cuves ou de récipients de réception pour des liquides fortement agressifs, caractérisée par l'utilisation d'une combinaison mixte d'une part de poudre argileuse en proportion de l'ordre de 15 % en poids, de préférence avec une taille de grains de 0/0,09 mm, d'une part minérale ou rocheuse en proportion de l'ordre de 85 % en poids et de préférence avec une taille de grains de 0/8 mm à 0/32 mm en particulier, ou de 0/63 mm au maximum, ainsi qu'un faible pourcentage en poids d'un hydrogel étanchant les pores, en choisissant pour la part minérale ou rocheuse des roches effusives essentiellement exemptes de carbonates.

2. Masse d'étanchéité selon la revendication 1, caractérisée en ce que la part minérale ou rocheuse est constituée d'une roche exempte de carbonates, en particulier en roches effusives exemptes de carbonates.

3. Masse d'étanchéité selon l'une ou l'autre des revendications 1 et 2, caractérisée en ce que l'ensemble du mélange est exempt de carbonates.

4. Utilisation de roches effusives en une composition exempte de carbonates et avec une taille de grains d'environ 0/8 à 0/63 mm en tant que partie minérale ou rocheuse pour des masses d'étanchéité contre des substances fortement ou hautement agressives, en mélangeant un faible pourcentage en poids d'un hydrogel étanchant les pores, pour l'étanchement du fond et des parois de dépôts de déchets et d'ordures avec un liquide d'égouttement fortement agressif, ou en tant que revêtement de cuves ou de récipients de réception pour des liquides fortement agressifs.

5. Utilisation d'une poudre argileuse exempte de carbonates en combinaison avec une utilisation selon la revendication 4.
